(19) Europäisches Patentamt
European Patent Office
Office européen des brevets

(11) EP 2 785 435 B1

(12) **FASCICULE DE BREVET EUROPEEN**

(45) Date de publication et mention de la délivrance du brevet:
**28.02.2018 Bulletin 2018/09**

(21) Numéro de dépôt: **12788620.8**

(22) Date de dépôt: **18.10.2012**

(51) Int Cl.:
***B01D 53/14*** *(2006.01)* ***B01D 53/52*** *(2006.01)*
***B01D 53/62*** *(2006.01)*

(86) Numéro de dépôt international:
**PCT/FR2012/000425**

(87) Numéro de publication internationale:
**WO 2013/079816 (06.06.2013 Gazette 2013/23)**

(54) **PROCEDE D'ELIMINATION DE COMPOSES ACIDES D'UN EFFLUENT GAZEUX AVEC UNE SOLUTION ABSORBANTE A BASE DE BIS(AMINO-3-PROPYL)ETHERS OU DE (AMINO-2-ETHYL)-(AMINO-3-PROPYL)ETHERS**

VERFAHREN ZUR ENTFERNUNG SAURER VERBINDUNGEN AUS EINEM ABGAS MIT EINER ABSORPTIONSLÖSUNG AUS BIS(AMINO-3-PROPYL)-ETHERN ODER (AMINO-2-ETHYL)-(AMINO-3-PROPYL)-ETHERN

METHOD FOR ELIMINATING ACID COMPOUNDS FROM A GASEOUS EFFLUENT WITH AN ABSORBENT SOLUTION MADE FROM BIS(AMINO-3-PROPYL)ETHERS OR (AMINO-2-ETHYL)-(AMINO-3-PROPYL)ETHERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2011 FR 1103656**

(43) Date de publication de la demande:
**08.10.2014 Bulletin 2014/41**

(73) Titulaire: **IFP Energies nouvelles
92500 Rueil-Malmaison (FR)**

(72) Inventeurs:
- **DELFORT, Bruno
F-75005 Paris (FR)**
- **LE PENNEC, Dominique
F-78910 Orgerus (FR)**
- **PORCHERON, Fabien
F-69780 Mions (FR)**
- **HUARD, Thierry
F-69360 Saint-Syphorien d´Ozon (FR)**
- **GRANDJEAN, Julien
F-69008 Lyon (FR)**

(56) Documents cités:
**EP-A1- 0 087 856**
**WO-A1-2010/077548**
**WO-A1-2011/082807**
**FR-A1- 2 898 284**
**JP-A- 8 257 353**
**US-A1- 2010 105 551**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 785 435 B1

## Description

La présente invention concerne le domaine des procédés de désacidification d'un effluent gazeux. L'invention s'applique avantageusement au traitement de gaz d'origine industrielle et du gaz naturel.

On utilise couramment des procédés d'absorption mettant en oeuvre une solution aqueuse d'amines, pour retirer les composés acides (notamment le $CO_2$, l'$H_2S$, le COS, le $CS_2$, le $SO_2$ et les mercaptans) présents dans un gaz. Le gaz est désacidifié par mise en contact avec la solution absorbante, puis la solution absorbante est régénérée thermiquement. Par exemple le document US 6 852 144 décrit une méthode d'élimination des composés acides des hydrocarbures. La méthode utilise une solution absorbante eau-N-méthyldiéthanolamine ou eau-triéthanolamine contenant une forte proportion d'un composé appartenant au groupe suivant : pipérazine et/ou méthylpipérazine et/ou morpholine.

Une limitation des solutions absorbantes couramment utilisées dans des applications de désacidification est une sélectivité insuffisante d'absorption de l'$H_2S$ par rapport au $CO_2$. En effet, dans certains cas de désacidification du gaz naturel, on recherche une élimination sélective de l'$H_2S$ en limitant au maximum l'absorption du $CO_2$. Cette contrainte est particulièrement importante pour des gaz à traiter contenant déjà une teneur en $CO_2$ inférieure ou égale à la spécification désirée. On recherche alors une capacité d'absorption de $H_2S$ maximale avec une sélectivité maximale d'absorption de $H_2S$ vis-à-vis du $CO_2$. Cette sélectivité permet de maximiser la quantité de gaz traité produit et de récupérer un gaz acide en sortie de régénérateur ayant une concentration la plus élevée possible en $H_2S$ ce qui limite la taille des unités de la chaîne soufre en aval du traitement et garanti un meilleur fonctionnement. Dans certains cas, une unité d'enrichissement en $H_2S$ est nécessaire pour concentrer en $H_2S$ le gaz acide. Dans ce cas, on recherche également l'amine la plus sélective. Des amines tertiaires, comme la N-méthyldiéthanolamine, ou encombrées présentant une cinétique de réaction lente avec le $CO_2$ sont couramment utilisées, mais présentent des sélectivités limitées à des taux de charge en $H_2S$ élevés.

Une autre limitation des solutions absorbantes couramment utilisées dans des applications de désacidification totale est une cinétique de captage du $CO_2$ ou du COS trop lente. Dans le cas où les spécifications désirées sur le $CO_2$ ou en COS sont très poussées, on recherche une cinétique de réaction la plus rapide possible de manière à réduire la hauteur de la colonne de colonne d'absorption, cet équipement sous pression, typiquement entre 20 et 90 bar, représentant une part importante des coûts investissements du procédé.

Que l'on recherche une cinétique de captage du $CO_2$ et du COS maximale dans une application désacidification totale, ou une cinétique de captage du $CO_2$ minimale dans une application sélective, on désire toujours utiliser une solution absorbante ayant la capacité cyclique la plus grande possible. Cette capacité cyclique, notée $\Delta\alpha$ correspond à la différence de taux de charge ($\alpha$ désignant le nombre de mole de composés acides absorbés $n_{gaz\ acide}$ par kilogramme de solution absorbante) entre la solution absorbante alimentant la colonne d'absorption et la solution absorbante soutirée en fond de ladite colonne. En effet, plus la solution absorbante a une forte capacité cyclique, plus le débit de solution absorbante qu'il faut mettre en oeuvre pour désacidifier le gaz à traiter est restreint. Dans les procédés de traitement de gaz, la réduction du débit de solution absorbante a également un fort impact sur la réduction des investissements, notamment au niveau du dimensionnement de la colonne d'absorption.

Un autre aspect primordial des opérations de traitement de gaz ou fumées industrielles par solution absorbante reste la régénération de l'agent de séparation. En fonction du type d'absorption (physique et/ou chimique), on envisage généralement une régénération par détente, et/ou par distillation et/ou par entraînement par un gaz vaporisé appelé "gaz de strippage".

Notamment, une limitation des solutions absorbantes couramment utilisées aujourd'hui est une consommation énergétique nécessaire à la régénération du solvant qui est trop importante. Ceci est particulièrement vrai dans le cas où la pression partielle de gaz acides est faible. Par exemple, pour une solution aqueuse de 2-aminoéthanol (ou monoéthanolamine ou éthanolamine ou MEA) à 30 % poids utilisée pour le captage du $CO_2$ en post-combustion dans une fumée de centrale thermique, où la pression partielle de $CO_2$ est de l'ordre de 0,12 bar, l'énergie de régénération représente 3,7 GJ environ par tonne de $CO_2$ captée. Une telle consommation énergétique représente un coût opératoire considérable pour le procédé de captage du $CO_2$.

Il est bien connu de l'homme du métier que l'énergie nécessaire à la régénération par distillation d'une solution d'amine peut se décomposer selon trois postes différents : l'énergie nécessaire pour réchauffer la solution absorbante entre la tête et le fond du régénérateur, l'énergie nécessaire pour abaisser la pression partielle de gaz acide dans le régénérateur par vaporisation d'un gaz de strippage, et enfin l'énergie nécessaire pour casser la liaison chimique entre l'amine et le $CO_2$.

Ces deux premiers postes sont inversement proportionnels aux débits de solution absorbante qu'il est nécessaire de faire circuler dans l'unité pour réaliser une spécification donnée. Pour diminuer la consommation énergétique associée à la régénération du solvant, il est donc préférable encore une fois de maximiser la capacité cyclique du solvant.

Le dernier poste concerne l'énergie à fournir pour casser la liaison créée entre l'amine utilisée et le $CO_2$. Pour diminuer la consommation énergétique associée à la régénération de la solution absorbante, il est donc préférable de

minimiser l'enthalpie de liaison ΔH. Néanmoins, il n'est pas évident de trouver un solvant présentant une forte capacité cyclique et une faible enthalpie de réaction. La meilleure solution absorbante d'un point de vue énergétique est donc celui qui permettra d'avoir le meilleur compromis entre une forte capacité cyclique Δα et une faible enthalpie de liaison ΔH.

La stabilité chimique de la solution absorbante est également un aspect primordial dans les procédés de désacidification et de traitement de gaz. La tenue en dégradation est une limitation pour les solutions absorbantes couramment utilisées, notamment dans des conditions de régénération à des températures comprises entre 160 et 180°C envisagées dans les procédés de captage du $CO_2$. Ces conditions permettraient de récupérer le $CO_2$ à une pression comprise entre 5 et 10 bars, permettant de réaliser une économie d'énergie sur la compression du $CO_2$ capté en vue de son transport et stockage.

Il est donc difficile de trouver des composés, ou une famille de composés, permettant aux différents procédés de désacidification de fonctionner à moindre coûts opératoires (dont l'énergie de régénération et les coûts liées aux pertes par dégradation) et d'investissements (dont le coût de la colonne d'absorption), aussi bien dans une problématique de captage du $CO_2$ en post-combustion que dans une problématique de désacidification en traitement de gaz.

Il est bien connu de l'homme du métier que les amines tertiaires ou les amines secondaires avec un encombrement stérique sévère, telles que décrites dans les articles de G. Sartori et coll. parus dans Industrial Engineering and Chemistry Fundamentals, 22, (1983), 239-249 et Separation and Purification Methods, 16 (2) (1987), 171-200, ont une cinétique de captage du $CO_2$ plus lente que des amines primaires ou secondaires peu encombrées. En revanche, les amines tertiaires ou secondaires avec un encombrement stérique sévère ont une cinétique de captage de l'$H_2S$ instantanée, ce qui permet de réaliser une élimination sélective de l'$H_2S$ basée sur des performances cinétiques distinctes.

Parmi les applications de ces amines tertiaires ou encombrées, le brevet US 4,405,582 décrit un procédé d'élimination sélective de l'$H_2S$ dans des gaz contenant de l'$H_2S$ et du $CO_2$ par un absorbant contenant des amines de type diaminoéther où au moins une des deux fonctions amines est tertiaire.

Le brevet JP8257353 décrit un procédé de captage du $CO_2$ dans des fumées de combustion, à base de solutions d'amines correspondant à la formule générale

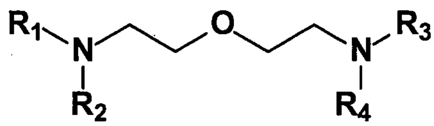

La formule générale de la diamine proposée dans ce brevet, impose exclusivement comme motif alkyléther reliant les deux atomes d'azote un motif éthoxyéthyle -CH2CH2-O-CH2CH2-. Plus particulièrement, le composé d'intérêt est le bis(2-diméthylaminoéthyl)éther en contact avec des fumées de combustion. Cependant ce document ne décrit pas les performances de tenue de dégradation de cette molécule.

Les inventeurs ont découvert que les amines de type diaminoéther ne sont pas équivalentes en terme de performances pour leur usage dans des formulations de solution absorbante pour le traitement de gaz acides dans un procédé industriel. Certaines molécules de type diaminoéther présentent des performances insuffisantes notamment en ce qui concerne leur stabilité chimique pour être utilisées convenablement dans le traitement de gaz acides. A contrario, d'autres molécules présentent des performances d'absorption et de stabilité chimique particulièrement élevées.

La présente invention a pour objet l'utilisation de molécules particulières appartenant à la famille des bis(aminoalkyl)éthers présentant un optimum de performances entre la capacité de captage de $CO_2$, l'élimination sélective de l'$H_2S$, et la stabilité thermique, dans le cadre de la désacidification d'un gaz. Ces bis(aminoalkyl)éthers présentent la particularité de présenter au moins un motif dialkylaminopropyléther. Plus précisemment, ces molécules sont des Bis(dialkylamino-3-propyl)éthers répondant à la formule générale :

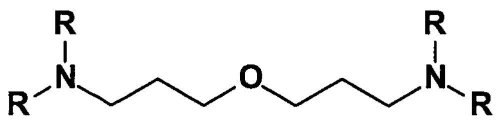

(I)

et des (dialkylamino-2-éthyl)-(dialkylamino-3-propyl)-éthers répondant à la formule générale :

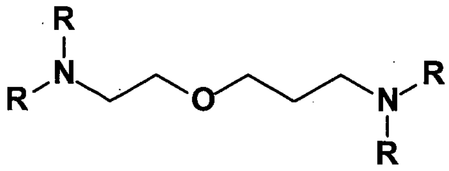

(II)

Dans les deux formules générales (I) et (II), chaque radical R est indépendamment choisi parmi un radical méthyle ou un radical éthyle.

De manière générale, la présente invention est définie par un procédé d'élimination des composés acides contenus dans un effluent gazeux, dans lequel on effectue une étape d'absorption des composés acides par mise en contact de l'effluent avec une solution absorbante comportant :

- de l'eau;
- au moins une diamine choisie parmi les molécules répondant aux formules générales (I) et (II)

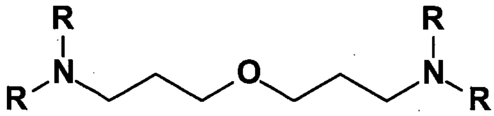

(I)

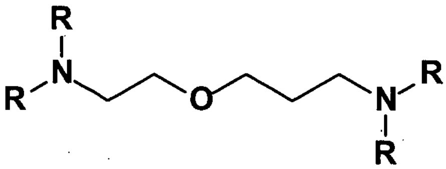

(II)

dans lesquelles, chaque radical R est indépendamment choisi parmi un radical méthyle ou un radical éthyle.

Selon l'invention, la diamine peut être choisie parmi l'une des molécules suivantes :

le Bis(diméthylamino-3-propyl)éther

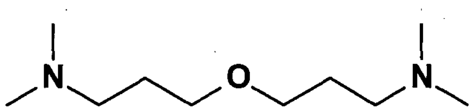

,

le Bis(diéthylamino-3-propyl)éther

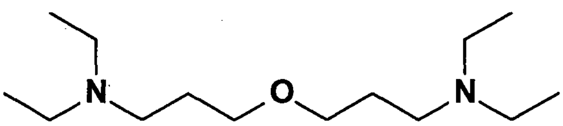

,

le (diméthylamino-2-éthyl)-(diméthylamino-3-propyl)-éther

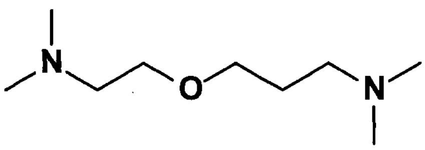

,

le (diéthylamino-2-éthyl)-(diméthylamino-3-propyl)-éther

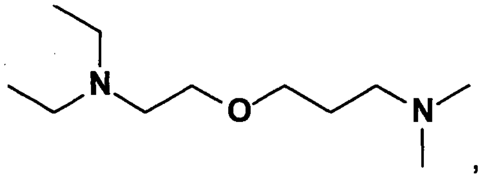

,

le (diméthylamino-2-éthyl)-(diéthylamino-3-propyl)-éther

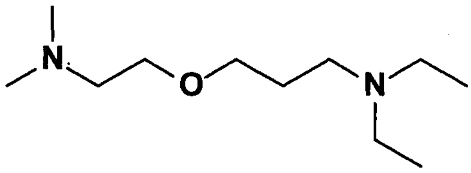

,

le (diéthylamino-2-éthyl)-(diéthylamino-3-propyl)-éther

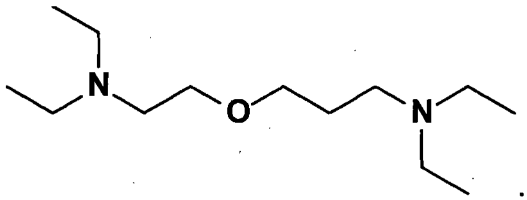

.

La solution absorbante peut comporter entre 10 % et 90 % poids de ladite diamine et entre 10 % et 90 % poids d'eau.

La solution absorbante peut comporter, en outre, une quantité non nulle et inférieure à 20 % poids d'une amine primaire ou secondaire. Ladite amine primaire ou secondaire est choisie dans le groupe constitué par :

- MonoEthanolAmine,
- N-butylethanolamine
- Aminoethylethanolamine,
- Diglycolamine,
- Pipérazine,
- N-(2-hydroxyethyl)Pipérazine,
- N-(2-aminoethyl)Pipérazine,
- Morpholine,
- 3-(metylamino)propylamine,
- 1,6-hexanediamine,
- N,N'-diméthyl-1,6-hexanediamine.

La solution absorbante peut comporter, en outre, un solvant physique choisi parmi le méthanol et le sulfolane.

L'étape d'absorption des composés acides peut être réalisée à une pression comprise entre 1 bar et 120 bars, et à une température comprise entre 20°C et 100°C.

Après l'étape d'absorption, on peut obtenir un effluent gazeux appauvri en composés acides et une solution absorbante chargée en composés acides, et on peut effectuer au moins une étape de régénération de la solution absorbante chargée en composés acides.

L'étape de régénération peut être réalisée à une pression comprise entre 1 bar et 10 bars et une température comprise entre 100°C et 180°C.

L'effluent gazeux peut être choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.

Dans le cas où l'effluent gazeux comporte de l'$H_2S$ et du $CO_2$, le procédé peut être mis en oeuvre pour l'élimination sélective de l'$H_2S$ par rapport au $CO_2$.

L'utilisation des composés bis(aminoalkyl)éthers selon l'invention permet d'obtenir des capacités cycliques plus importantes que les amines de référence, aussi bien dans des applications où la pression partielle de gaz acide

est faible (par exemple pour le captage du $CO_2$ contenu dans des fumées de combustion), que dans des applications où la pression partielle de gaz acide est élevée (par exemple le traitement du gaz naturel). Cette performance est accrue du fait d'une plus grande densité de sites amines rapportée à la masse molaire des molécules, mais aussi du fait de posséder sur la même molécule deux fonctions tertiaires ne pouvant pas former de carbamates.

Par ailleurs, les composés selon l'invention présentent une sélectivité vis-à-vis de l'$H_2S$ plus importante que les amines de référence, liée à la plus grande densité de sites amines tertiaires dont la cinétique de réaction vis-à-vis du $CO_2$ est lente.

De plus, dans le cas particulier d'une application en traitement de gaz naturel dans laquelle la solution absorbante contient une diamine selon l'invention en mélange avec une amine primaire ou secondaire, l'invention permet d'accélérer la cinétique d'absorption du COS par rapport à une solution de MDEA contenant la même quantité d'amine primaire ou secondaire. Ce gain de cinétique d'absorption du COS entraîne une économie sur le coût de la colonne d'absorption dans les cas où l'élimination de ce composé à des spécifications poussées (1 ppm) est requise.

En outre, les bis(aminoalkyl)éthers selon l'invention présentent un faible taux de dégradation à haute température par rapport aux solutions absorbantes à base d'amine de l'art antérieur. Par conséquent, il est possible de régénérer la solution absorbante selon l'invention à plus haute température et pression, et donc de produire un gaz acide à plus forte pression. Ceci est particulièrement intéressant dans le cas du captage du $CO_2$ contenu dans les fumées où le gaz acide doit être comprimé pour être liquéfié avant injection dans un réservoir souterrain.

D'autres caractéristiques et avantages de l'invention seront mieux compris et apparaîtront clairement à la lecture de la description faite, ci-après, en se référant à la figure 1 représentant un schéma de principe d'un procédé de traitement de gaz acides.

La présente invention propose d'éliminer les composés acides d'un effluent gazeux en mettant en oeuvre une solution aqueuse de Bis(dialkylamino-3-propyl)éthers répondant à la formule générale

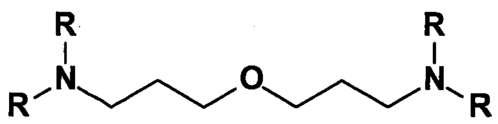

(I)

ou de (dialkylamino-2-éthyl)-(dialkylamino-3-propyl)-éthers répondant à la formule générale

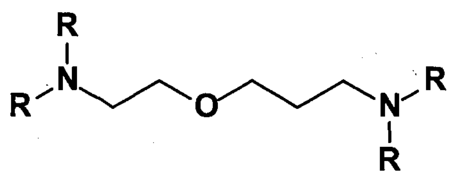

(II),

chaque radical R figurant dans les formules générales est indépendamment choisi parmi un radical méthyle ou un radical éthyle.

<u>Synthèse des bis(dialkylamino-3-propyl)éthers.</u>

On peut synthétiser ces molécules de l'invention selon toute voie permise par la chimie organique. Parmi celles-ci, on peut en citer quelques unes sans être exhaustif. Elles sont représentées par le schéma suivant et appellent quelques commentaires.

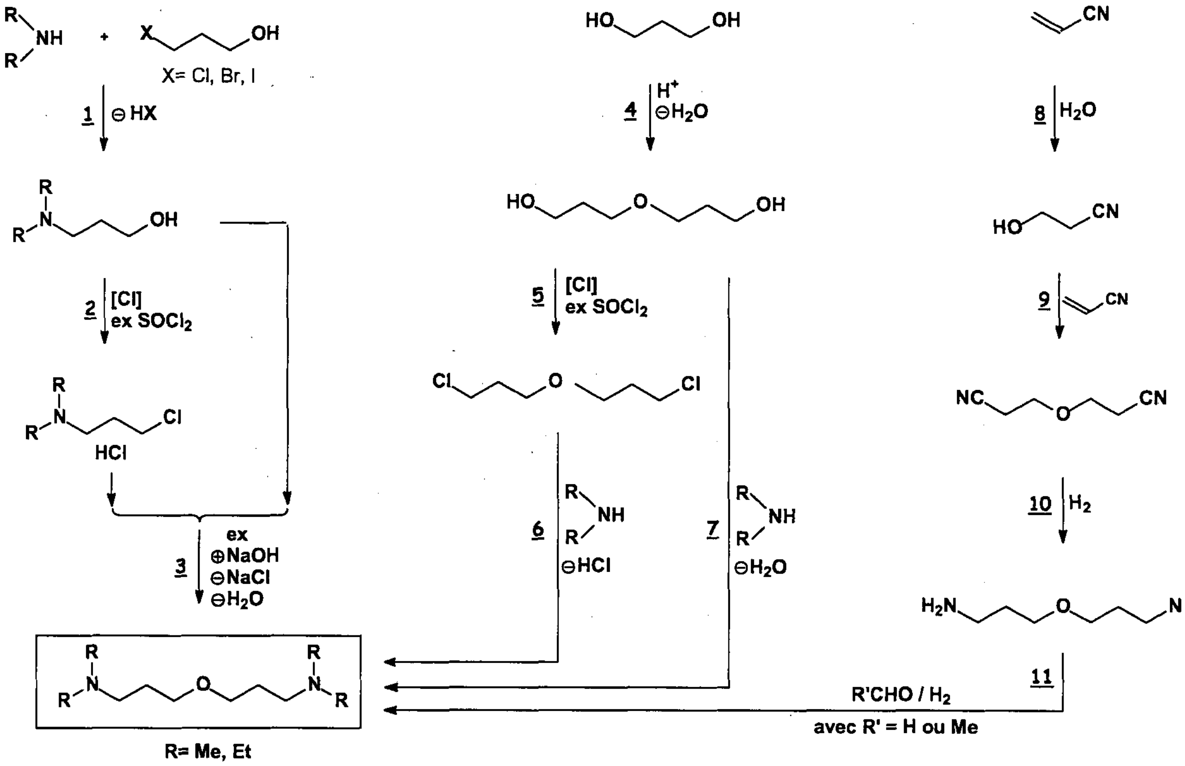


Une première voie est représentée par la succession des étapes 1, 2 et 3. Selon cette route, le 3-diméthylaminopropanol ou le 3-diéthylaminopropanol est préparé par condensation d'un 3-halogénopropanol par exemple le 3-chloropropanol avec la diméthylamine ou la diéthylamine. Une partie du 3-dialkylaminopropanol est ensuite converti en dialkylaminopropylchlorure généralement isolé sous forme de chlorhydrate. Cette réaction s'effectue avec les moyens connus de l'homme du métier par exemple avec le chlorure de thionyle. Enfin le 3-dialkylaminopropylchlorure et condensé avec le dialkylaminopropanol ou sa forme alcoolate pour conduire au bis(3-dialkylaminopropyl)éther de l'invention. Cette route de synthèse est notamment décrite dans les brevets US3480675 (1969) ainsi que dans les articles de J. Fakstorp et coll parus dans Acta Chemica Scandinavia, (1953), 134-139 et ibid, (1954), 350-353.

Une deuxième voie est représentée par la succession des étapes 4, 5 et 6. Selon cette route, le bis(3-hydroxypropyl)éther est obtenu par condensation-éthérification du 1,3-propanediol généralement en milieu acide. Cette étape est décrite notamment dans le brevet WO2009/059148 (2007). Puis ce diol est converti au moyen d'un agent de chloration tel le chlorure de thionyle en bis(3-chloropropyl)éther lequel est soumis à la réaction de la diméthylamine ou de la diéthylamine pour conduire au bis(3-dialkylaminopropyl)éther de l'invention. Une variante de cette voie consiste à effectuer la réaction de condensation de la diméthylamine ou la diéthylamine directement sur le diol bis(3-hydroxypropyl)éther sans passer par l'étape de chloration (étape 7 au lieu de l'enchaînement des étapes 5 +6).

Une troisième voie enchaîne les étapes 8, 9, 10 et 11 et consiste à réaliser l'hydrolyse d'une molécule d'acrylonitrile pour conduire au 3-hydroxypropionitrile qui par réaction avec une deuxième molécule d'acrylonitrile sera convertit en bis(2-cyanoéthyl)éther. Cette réaction a été décrite notamment dans les brevets US4965362 (1989) et US5268499 (1993). Le bis(2-cyanoéthyl)éther sera alors hydrogéné et la réduction des fonctions nitriles en fonction amines primaires qui est une réaction industrielle et bien maîtrisée conduira à la diamine bis(3-aminopropyl)éther qui sera ensuite méthylée ou éthylée selon les moyens connus pour cela, notamment l'amination réductrice avec du formaldéhyde ou de l'acétaldéhyde en présence d'hydrogène et d'un catalyseur approprié. Cette dernière réaction conduit aux bis(3-dialkylaminopropyl)éther de l'invention. Cette voie présente l'avantage de n'utiliser comme matière première que des produits de très grand tonnage, abondants et peu onéreux tel l'acrylonitrile, l'hydrogène, le formaldéhyde ou l'acétaldéhyde. Elle présente aussi l'avantage de ne recourir qu'a des réactions qui sont sélectives et industriellement bien maîtrisées, exemptes d'halogénures et ne générant aucun sous-produit.

Une variante de cette voie (non représentée sur la figure) peut faire appel à l'acrylamide au lieu de l'acrylonitrile. L'étape d'hydrolyse conduit au propanamide,3,3'-oxybis qui est ensuite hydrogéné en bis(3-aminopropyl)éther puis méthylée ou éthylée. Une seconde variante de cette voie (non représentée sur la figure) fait appel au N,N-diméthylacrylamide ou au N,N-diéthylacrylamide au lieu de l'acrylonitrile. L'étape d'hydrolyse conduit au N,N-diméthylpropanamide,3,3'-oxybis ou au N,N-diéthylpropanamide,3,3'-oxybis. Enfin, une étape d'hydrogénation des fonctions amides conduit aux diamines de l'invention.

Synthèse des (dialkylamino-2-éthyl)-(dialkylamino-3-propyl)-éthers.

On peut synthétiser ces molécules de l'invention selon toute voie permise par la chimie organique. Parmi celles-ci, on peut en citer quelques unes sans être exhaustif. Elles sont représentées par le schéma suivant et appellent quelques commentaires.

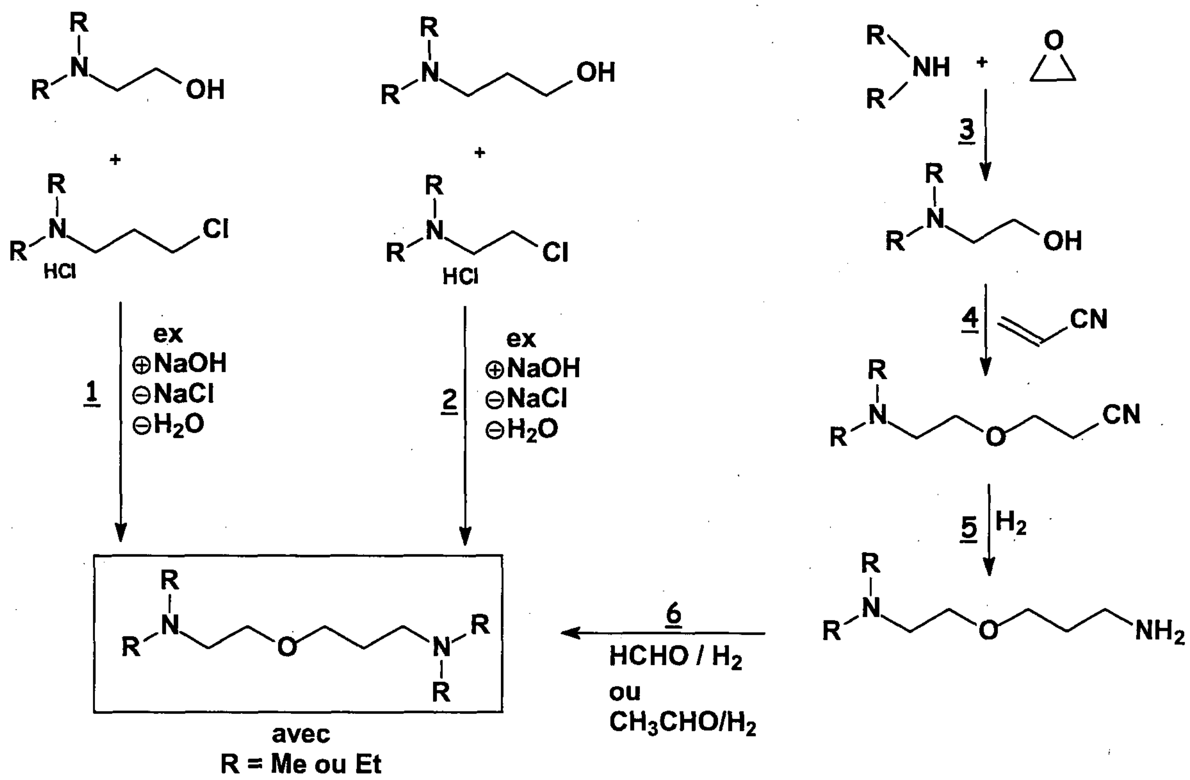


Une première voie est représentée par l'étape 1. Selon cette route, le (dialkylamino-2-éthyl)-(dialkylamino-3-propyl)-éther est préparé par condensation d'un 3-dialkylaminopropylchlorure souvent disponible sous sa forme chlorhydrate avec un 2-dialkylaminoéthanol ou sa forme alcoolate pour conduire au (dialkylamino-2-éthyl)-(dialkylamino-3-propyl)-éther de l'invention.

Une seconde voie est représentée par l'étape 2. Selon cette route, le (dialkylamino-2-éthyl)-(dialkylamino-3-propyl)-éther est préparé par condensation d'un 2-dialkylaminoéthylchlorure souvent disponible sous sa forme chlorhydrate avec un 3-dialkylaminopropanol ou sa forme alcoolate pour conduire au (dialkylamino-2-éthyl)-(dialkylamino-3-propyl)-éther de l'invention.

Cette route de synthèse est notamment décrite dans les brevets US3480675 (1969) ainsi que dans les articles de J. Fakstorp et coll parus dans Acta Chemica Scandinavia, (1953), 134-139 et ibid, (1954), 350-353.

Une troisième voie enchaîne les étapes 3, 4, 5 et 6 et consiste à réaliser l'addition d'une molécule de 2-dialkylaminoéthanol et d'une molécule d'acrylonitrile selon la réaction 4 pour conduire au (dialkylamino-2-éthyl)-(3-cyanoéthyl)-éther. Le 2-dialkylaminoéthanol peut être préparé par la réaction 1 d'addition de dialkylamine sur de l'oxyde d'éthylène. Le (dialkylamino-2-éthyl)-(3-cyanoéthyl)-éther est ensuite hydrogéné en (dialkylamino-2-éthyl)-(3-aminopropyl)-éther selon la réaction 5. Enfin la fonction amine primaire du (dialkylamino-2-éthyl)-(3-aminopropyl)-éther est méthylée ou éthylée selon les moyens connus pour cela, notamment l'amination réductrice avec du formaldéhyde ou de l'acétaldéhyde en présence d'hydrogène et d'un catalyseur approprié pour conduire au (dialkylamino-2-éthyl)-(dialkylamino-3-propyl)-éther de l'invention. Cette voie présente l'avantage de n'utiliser comme matière première que des produits de très grand tonnage, abondants et peu onéreux tel l'oxyde d'éthylène, la diméthylamine, la diéthylamine, l'acrylonitrile, l'hydrogène, le formaldéhyde ou l'acétaldéhyde. Elle présente aussi l'avantage de ne recourir qu'a des réactions qui sont sélectives et industriellement bien maîtrisées, exemptes d'halogénures et ne générant aucun sous-produit.

Une variante de cette voie (non représentée sur la figure) peut faire appel à l'acrylamide au lieu de l'acrylonitrile. La réduction de la fonction amide résiduelle conduira au (dialkylamino-2-éthyl)-(3-aminopropyl)-éther.

Nature des effluents gazeux

Les solutions absorbantes selon l'invention peuvent être mises en oeuvre pour désacidifier les effluents gazeux suivants : le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur. Ces effluents gazeux contiennent un ou plusieurs des composés acides suivants : le $CO_2$, l'$H_2S$, des mercaptans, du COS, du $CS_2$, le $SO_2$.

Le procédé selon l'invention est bien adapté pour capter le $CO_2$ contenu dans des fumées de combustion. Les sont produites fumées de combustion notamment par la combustion d'hydrocarbures, de biogaz, de charbon dans une chaudière ou pour une turbine à gaz de combustion, par exemple dans le but de produire de l'électricité. A titre d'illustration, on peut mettre en oeuvre le procédé selon l'invention pour absorber au moins 70 %, de préférence au moins 80 % voire au moins 90 % du $CO_2$ contenu dans les fumées de combustion. Ces fumées ont généralement une température comprise entre 20 et 60°C, une pression comprise entre 1 et 5 bars et peuvent comporter entre 50 et 80 % d'azote, entre 5 et 40 % de dioxyde de carbone, entre 1 et 20 % d'oxygène, et quelques impuretés comme des SOx et des NOx, s'ils n'ont pas été éliminés en amont du procédé de désacidification. En particulier, le procédé selon l'invention est particulièrement bien adapté pour absorber le $CO_2$ contenu dans des fumées de combustion comportant une faible pression partielle de $CO_2$, par exemple une pression partielle de $CO_2$ inférieure à 200 mbars.

Le procédé selon l'invention peut être mis en oeuvre pour désacidifier un gaz de synthèse. Le gaz de synthèse contient du monoxyde de carbone CO, de l'hydrogène $H_2$ (généralement dans un ratio $H_2$/CO égale à 2), de la vapeur d'eau (généralement à saturation à la température où le lavage est effectué) et du dioxyde de carbone $CO_2$ (de l'ordre de la dizaine de %). La pression est généralement comprise entre 20 et 30 bars, mais peut atteindre jusqu'à 70 bars. Il contient, en outre, des impuretés soufrées ($H_2S$, COS, etc.), azotées ($NH_3$, HCN), halogénées ainsi que des métaux lourds.

Le procédé selon l'invention peut être mis en oeuvre pour désacidifier un gaz naturel. Le gaz naturel est constitué majoritairement d'hydrocarbures gazeux, mais peut contenir plusieurs des composés acides suivants : le $CO_2$, l'$H_2S$, des mercaptans, du COS, du $CS_2$. La teneur de ces composés acides est très variable et peut aller jusqu'à 40 % pour le $CO_2$ et l'$H_2S$. La température du gaz naturel peut être comprise entre 20°C et 100°C. La pression du gaz naturel à traiter peut être comprise entre 10 et 120 bars. L'invention peut être mise en oeuvre pour atteindre des spécifications généralement imposées sur le gaz désacidifié, qui sont moins de 2 % volumique de $CO_2$, voire moins 50 ppm volumique de $CO_2$ pour réaliser ensuite une liquéfaction du gaz naturel et moins de 4 ppm volumique d'$H_2S$, et moins de 50 ppm, voire moins de 10 ppm, volume de soufre total.

Composition de la solution absorbante

La solution absorbante mise en oeuvre dans le procédé selon l'invention comporte :

a - de l'eau;

b - au moins une diamine choisie parmi les Bis(dialkylamino-3-propyl)éthers répondant la formule (I) ou les (dialkylamino-2-éthyl)-(dialkylamino-3-propyl)-éthers répondant à la formule (II) suivante :

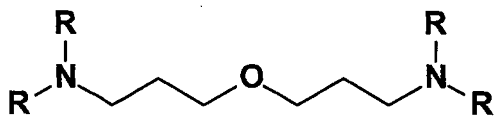

(I)

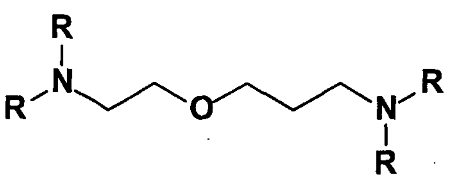

(II)

Dans les formules générales (I) et (II), chaque radical R est indépendamment choisi parmi un radical méthyle ou un radical éthyle.

Par exemple, la solution absorbante selon l'invention peut comporter l'une des molécules diamines suivantes :

le Bis(diméthylamino-3-propyl)éther

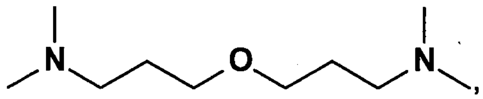

le Bis(diéthylamino-3-propyl)éther

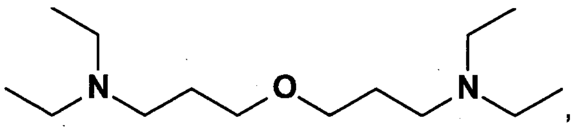

le (diméthylamino-2-éthyl)-(diméthylamino-3-propyl)-éther

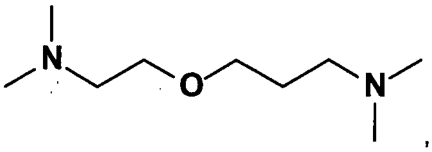

le (diéthyfamino-2-éthyl)-(diméthylamino-3-propyl)-éther

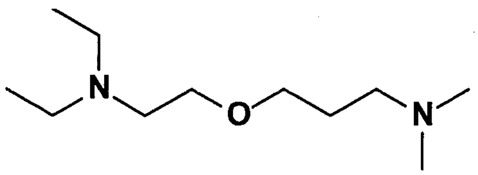

le (diméthylamino-2-éthyl)-(diéthylamino-3-propyl)-éther

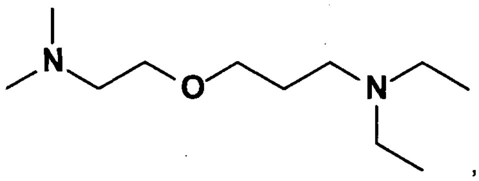

le (diéthylamino-2-éthyl)-(diéthylamino-3-propyl)-éther

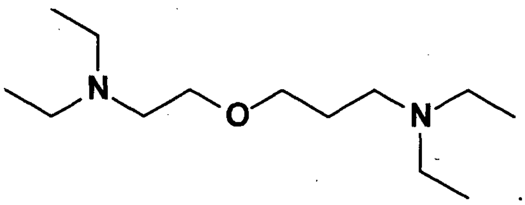

De préférence, la solution absorbante selon l'invention comporte l'une des molécules diamines suivante :

le bis(diméthylamino-3-propyl)éther

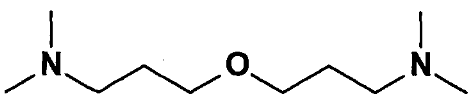, ou

le (diméthylamino-2-éthyl)-(diméthylamino-3-propyl)-éther

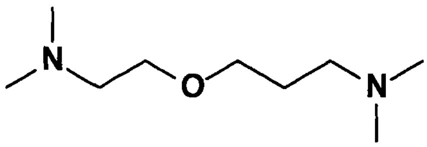

Les diamines selon l'invention peuvent être en concentration variable dans la solution absorbante, par exemple comprise entre 10 % et 90 % poids, de préférence entre 20 % et 60 % poids, de manière très préférée entre 30 % et 50 % poids.

La solution absorbante peut contenir entre 10 % et 90 % poids d'eau, de préférence entre 40 % et 80 % poids d'eau, de manière très préférée de 50 % à 70 % poids d'eau.

Dans un mode de réalisation, les diamines selon l'invention peuvent être formulées avec un composé, contenant au moins une fonction amine primaire ou secondaire. Par exemple, la solution absorbante comporte jusqu'à une concentration de 20 % poids, de préférence inférieure à 15 % poids, de préférence inférieure à 10 % poids dudit composé contenant au moins une fonction amine primaire ou secondaire. De préférence, la solution absorbante comporte au moins 0,5 % poids dudit composé contenant au moins une fonction amine primaire ou secondaire. Ledit composé permet d'accélérer la cinétique d'absorption du COS et, dans certains cas, du $CO_2$ contenu dans le gaz à traiter.

Une liste non exhaustive de composés contenant au moins une fonction amine primaire ou secondaire qui peuvent entrer dans la formulation est donnée ci-dessous :

- Monoéthanolamine,
- N-butyléthanolamine
- Aminoéthyléthanolamine,
- Diglycolamine,
- Pipérazine,
- N-(2-hydroxyéthyl)pipérazine,
- N-(2-aminoéthyl)pipérazine,
- Morpholine,
- 3-(méthylamino)propylamine.
- 1,6-hexanediamine
- N,N'-diméthyl-1,6-hexanediamine

La solution absorbante peut comporter en outre un solvant physique choisi, par exemple, parmi le méthanol et le sulfolane.

Procédé d'élimination des composés acides dans un effluent gazeux

La mise en oeuvre d'une solution aqueuse comportant une diamine selon l'invention pour désacidifier un effluent gazeux est réalisée de façon schématique en effectuant une étape d'absorption suivie d'une étape de régénération, par exemple tel que représenté par la figure 1.

En référence à la figure 1, l'étape d'absorption consiste à mettre en contact l'effluent gazeux 1 avec la solution absorbante 4. L'effluent gazeux 1 est introduit en fond de C1, la solution absorbante est introduite en tête de C1. La colonne C1 est munie de moyen de mise en contact entre gaz et liquide, par exemple un garnissage vrac, un garnissage structuré ou des plateaux de distillation. Lors du contact, les fonctions amines des diamines selon l'invention de la solution absorbante réagissent avec les composés acides contenus dans l'effluent de manière à obtenir un effluent gazeux appauvri en composés acides 2 évacuée en tête de C1 et une solution absorbante enrichie en composés acides 3 évacuée en fond de C1 pour être régénérée.

L'étape de régénération consiste notamment à chauffer et, éventuellement à détendre, la solution absorbante enrichie en composés acides afin de libérer les composés acides sous forme gazeuse. La solution absorbante enrichie en composés acides 3 est introduite dans l'échangeur de chaleur E1, où elle est réchauffée par le flux 6 provenant de la colonne de régénération C2. La solution 5 réchauffée en sortie de E1 est introduite dans la colonne de régénération C2.

La colonne de régénération C2 est équipée d'internes de mise en contact entre gaz et liquide, par exemple des plateaux, des garnissages en vrac ou structurés. Le fond de la colonne C2 est équipée d'un rebouilleur R1 qui apporte la chaleur nécessaire à la régénération en vaporisant une fraction de la solution absorbante. Dans la colonne C2, sous l'effet de la mise en contact de la solution absorbante arrivant par 5 avec la vapeur produite par le rebouilleur, les composés acides sont libérés sous forme gazeuse et évacués en tête de C2 par le conduit 7. La solution absorbante

régénérée 6, c'est-à-dire appauvrie en composés acides 6 est refroidi dans E1, puis recyclée dans la colonne C1 par le conduit 4.

L'étape d'absorption des composés acides peut être réalisée à une pression dans C1 comprise entre 1 bar et 120 bars, de préférence entre 20 bars et 100 bars pour le traitement d'un gaz naturel, de préférence entre 1 bar et 3 bars pour le traitement des fumées industrielles, et à une température dans C1 comprise entre 20°C et 100°C, préférentiellement comprise entre 30°C et 90°C, voire entre 30 et 60°C.

L'étape de régénération du procédé selon l'invention peut être réalisée par régénération thermique, éventuellement complétée par une ou plusieurs étapes de détente.

La régénération peut être effectuée à une pression dans C2 comprise entre 1 bar et 5 bars, voire jusqu'à 10 bars et à une température dans C2 comprise entre 100°C et 180°C, de préférence comprise entre 130°C et 170°C. De manière préférée, la température de régénération dans C2 est comprise entre 155°C et 180°C dans le cas où l'on souhaite réinjecter les gaz acides.

**Exemples :**

On utilise comme solution absorbante dans ces exemples des solutions aqueuses comportant entre 30 % et 50 % poids de diamine selon l'invention.

Exemple 1 : Mode opératoire de synthèse

Le mode opératoire de synthèse est donné pour les composés des formules générales (I) et (II).

Les exemples suivants illustrent la synthèse des molécules de l'invention selon la première voie de synthèse précédemment décrite, étant entendu que toutes les possibilités de synthèse de ces molécules tant au niveau des routes de synthèses que des modes opératoires possibles ne sont pas ici décrites.

Synthèse du Bis(diméthylamino-3-propyl)éther

On prépare un alcoolate de 3-diméthylamino-1-propanol par réaction de celui-ci avec une quantité équimolaire de soude dans du toluène. L'eau de condensation est éliminée par distillation azéotropique. On ajoute lentement à 4.76 moles de cet alcoolate porté à reflux dans du toluène 2.86 moles de 3-diméthylamino-1-chloropropane. La réaction est ensuite poursuivie pendant 1,5 heure. Après retour à la température ambiante, on ajoute 300 ml d'eau et on procède par décantation à la séparation de la phase organique. On extrait la phase aqueuse trois fois avec du toluène, puis on joint les phases organiques et après une distillation sous pression réduite, on recueille 359g d'un produit conforme à la structure du bis(diméthylamino-3-propyl)éther selon l'analyse par 13C-RMN (CDCl3) :

27,3ppm : (CH3)2N-CH2-**CH2**-CH2--O-CH2-**CH2**-CH2-N(CH3)2
44,7ppm : (**CH3**)2N-CH2-CH2-CH2-O-CH2-CH2-CH2-N(**CH3**)2
55,9ppm : (CH3)2N-**CH2**-CH2-CH2-O-CH2-CH2-**CH2**-N(CH3)2
68,2ppm : (CH3)2N-CH2-CH2-**CH2**-O-**CH2**-CH2-CH2-N(CH3)2

Synthèse du Bis(diéthylamino-3-propyl)éther

On ajoute avec précaution 20,7 moles de diéthylamine à 6.88 moles de 3-chloro-1-propanol à la température ambiante en contrôlant l'exotherme, puis on introduit le milieu réactionnel dans un réacteur autoclave que l'on porte à 120°C pendant 4 heures. Après retour à la température ambiante, on distille l'excès de diéthylamine puis on procède à la neutralisation du milieu avec de la soude. Après extraction avec de l'éther et distillation, on recueille 766g de 3-diéthylamino-1-propanol. On traite 1,91 mole de ce produit avec 2.03 mole de chlorure de thionyle dans 750 ml de dichlorométhane à une température n'excédant pas 20°C. Puis après distillation du dichlorométhane et du chlorure de thionyle en excès et recristallisation avec un mélange d'alcool et d'acétone, on obtient 291g d'un solide qui correspond au chlorhydrate du 3-diéthylamino-1-chloropropane. Ce chlorhydrate (1,53 mole) est neutralisé et ajouté à 2,0 moles d'alcoolate de sodium du 3-diéthylamino-1-propanol précédemment préparé. La réaction est effectuée dans des conditions similaires à celles de l'exemple précédent à ceci près que l'addition d'eau et l'extraction avec de l'éther sont remplacées par une centrifugation du sel formé. Après distillation, on recueille 295g d'un produit conforme à la structure du bis(diéthylamino-3-propyl)éther selon l'analyse par 13C-RMN ($CDCl_3$).

11,3ppm : (**CH3**-CH2)2N-CH2-CH2-CH2-O-CH2-CH2-CH2-N(CH2-**CH3**)2
27,1ppm : (**CH3**-CH2)2N-CH2-**CH2**-CH2-O-CH2-**CH2**-CH2-N(CH2-CH3)2
46,3ppm : (CH3-**CH2**)2N-CH2-CH2-CH2-O-CH2-CH2-CH2-N(**CH2**-CH3)2

49,1ppm : (CH3-CH2)2N-**CH2**-CH2-CH2-O-CH2-CH2-**CH2**-N(CH2-CH3)2
68,5ppm : (CH3-CH2)2N-CH2-CH2-**CH2**-O-**CH2**-CH2-CH2-N(CH2-CH3)2

Synthèse du (diméthylamino-2-éthyl)-(diméthylamino-3-propyl)-éther

On prépare un alcoolate de 2-diméthylaminoéthanol par réaction de celui-ci avec une quantité équimolaire de soude dans du toluène. L'eau de condensation est éliminée par distillation azéotropique. On ajoute lentement à 1.56 moles de cet alcoolate porté à reflux dans du toluène 0.89 moles de 3-diméthylamino-1-chloropropane. La réaction est ensuite poursuivie pendant 3 heures. Après retour à la température ambiante, on ajoute 300 ml d'eau et on procède par décantation à la séparation de la phase organique. On extrait la phase aqueuse trois fois avec du toluène, puis on joint les phases organiques et après une distillation sous pression réduite, on recueille 78g d'un produit conforme à la structure du (diméthylamino-2-éthyl)-(diméthylamino-3-propyl)-éther selon l'analyse par RMN 13C-RMN (CDCl3) :

45.1 ppm : (**C**H3)2N-CH2-CH2-O-CH2-CH2-CH2-N(CH3)2
58.1 ppm : (CH3)2N-**C**H2-CH2-O-CH2-CH2-CH2-N(CH3)2
68.6 ppm : (CH3)2N-CH2-**C**H2-O-CH2-CH2-CH2-N(CH3)2
68.1 ppm : (CH3)2N-CH2-CH2-O-**C**H2-CH2-CH2-N(CH3)2
27.0 ppm : (CH3)2N-CH2-CH2-O-CH2-**C**H2-CH2-N(CH3)2
58.1 ppm : (CH3)2N-CH2-CH2-O-CH2-CH2-**C**H2-N(CH3)2
44.7 ppm : (CH3)2N-CH2-CH2-O-CH2-CH2-CH2-N(**C**H3)2

Exemple 2 : Capacité de captage de la Bis(diméthylamino-3-propyl)éther

Les performances de capacité de captage du $CO_2$ des diamines selon l'invention sont comparées notamment à celles d'une solution aqueuse de MonoEthanolAmine à 30 % poids, qui constitue le solvant de référence pour une application de captage du $CO_2$ contenu dans des fumées en post-combustion. Elles sont également comparées à celles d'une solution de aqueuse de 1,2-bis(2-diméthylaminoéthoxy)éthane, citée dans le brevet US4,405,582 ainsi que celles de la Bis-[2-(N,N dimethylamino)ethyl]ether revendiquée par le Brevet JP8257353

On réalise un test d'absorption sur des solutions aqueuses d'amine au sein d'un réacteur fermé parfaitement agité et dont la température est contrôlée par un système de régulation. Pour chaque solution, l'absorption est réalisée dans un volume liquide de 50 $cm^3$ par des injections de $CO_2$ pur à partir d'une réserve. La solution de solvant est préalablement tirée sous vide avant toute injections de $CO_2$. La pression de la phase gaz dans le réacteur est mesurée et un bilan matière global sur la phase gaz permet de mesurer le taux de charge du solvant $\alpha$ = nb de mole gaz acide/nb de mole amine.

A titre d'exemple, on compare dans le tableau 1 les taux de charge ($\alpha$ = nb de mole gaz acide/nb de mole amine) obtenus à 40°C pour différentes pressions partielles de $CO_2$ entre des solutions absorbantes de Bis(diméthylamino-3-propyl)éther selon l'invention selon l'invention, une solution absorbante de MonoEthanolAmine, ainsi qu'une solution absorbante de 1,2-bis(2-diméthylaminoéthoxy)éthane, et une solution absorbante de Bis-[2-(N,N dimethylamino)ethyl]ether, à 30 % en poids pour une application de captage du $CO_2$ en post-combustion.

Pour passer d'une grandeur du taux de charge obtenu au laboratoire à une grandeur caractéristique du procédé, quelques calculs sont nécessaires, et sont explicités ci-dessous pour l'application visée :

Dans le cas d'une application de captage du $CO_2$ en post-combustion, les pressions partielles de $CO_2$ dans l'effluent à traiter sont typiquement 0,1 bar avec une température de 40°C, et l'on souhaite abattre 90 % du gaz acide. On calcule la capacité cyclique $\Delta\alpha_{PC}$ exprimée en moles de $CO_2$ par kg de solvant, en considérant que le solvant atteint sa capacité thermodynamique maximale en fond de colonne d'absorption $\alpha_{PPCO2=0,1bar}$ et doit au moins être régénéré en dessous de sa capacité thermodynamique dans les conditions de la tête de colonne $\alpha_{PPCO2=0,01bar}$ pour réaliser 90 % d'abattement du $CO_2$.

$$\Delta\alpha_{PC} = \left(\alpha_{PPCO2=0,1bar} - \alpha_{PPCO2=0,01bar}\right)\cdot[A]\cdot 10/M$$

où [A] est la concentration d'amine exprimée en % poids, et M la masse molaire de l'amine en g/mol, $\alpha_{PPCO2=0,1bar}$ et $\alpha_{PPCO2=0,01bar}$ sont les taux de charge (mole $CO_2$/mole d'amine) du solvant en équilibre respectivement avec une pression partielle de 0,1 bar et 0,01 bar de $CO_2$.

L'enthalpie de réaction peut être obtenue par calcul à partir de plusieurs isothermes d'absorption du $CO_2$ en appliquant la loi de Van't Hoff.

Tableau 1

| | | | Taux de charge $\alpha = n_{CO2}/n_{amine}$ | | | |
|---|---|---|---|---|---|---|
| Nom Générique | Concentration | T (°C) | $P_{PCO2}$ = 0,1 bar | $P_{PCO2}$ = 0,01 bar | $\Delta\alpha_{PC}$ ($mol_{CO2}$/ kg Solvant) | ΔH (kJ/mol $_{CO2}$) |
| MEA | 30 % poids | 40 | 0.52 | 0.44 | 0.38 | 92 |
| 1,2-bis(2-diméthylaminoéthoxy)éthane (décrit dans le document US 4,405,582) | 30 % poids | 40 | 1.01 | 0.21 | 1.18 | 62 |
| Bis[2-(N,N-dimethylamino)-éthyl] ether (décrit dans le document JP8257353) | 30 % pds | 40 | 0.96 | 0.23 | 1.38 | 59 |
| Bis(diméthylamino-3-propyl)éther (selon l'invention) | 30 % poids | 40 | 1.21 | 0.31 | 1.44 | 59 |

Cet exemple montre les taux de charge plus importants qui peuvent être obtenus grâce à une solution absorbante selon l'invention, comprenant 30 % poids de Bis(diméthylamino-3-propyl)éther.

De plus, pour une application captage des fumées en post-combustion où la pression partielle de $CO_2$ dans l'effluent à traiter est de 0.1 bar, cet exemple illustre la plus grande capacité cyclique obtenue grâce à une solution absorbante selon l'invention, comprenant 30 % poids de molécules pour atteindre un taux d'abattage de 90 % en sortie d'absorbeur. Dans cet application où l'énergie associée à la régénération de la solution est critique, on peut remarquer que l'amine selon l'invention permet d'obtenir un bien meilleur compromis que la MEA, en termes de capacité cyclique et d'enthalpie de réaction. On observe également un gain en termes de capacité cyclique et d'enthalpie de réaction de la formulation selon l'invention comparée à la 1,2-bis(2-diméthylaminoéthoxy)éthane citée dans le brevet US4,405,582 et à la Bis[2-(N,N dimethylamino) ethyl] ether revendiquée dans le brevet JP8257353.

Exemple 3 : Capacité de captage de solutions de Bis(diméthylamino-3-propyl)éther et de (diméthylamino-2-éthyl)-(diméthylamino-3-propyl)-éther activées avec de la pipérazine.

Les performances de capacité de captage du $CO_2$ de solutions aqueuses amines selon l'invention en mélange avec la pipérazine sont comparées notamment à celles d'une solution aqueuse de MonoEthanolAmine à 30 % poids, qui constitue le solvant de référence pour une application de captage du $CO_2$ contenu dans des fumées en post-combustion. Elles sont également comparées à celles d'une solution de aqueuse de 1,2-bis(2-diméthylaminoéthoxy)éthane, citée dans le brevet US4,405,582 contenant le même pourcentage poids de diamine tertiaire et de pipérazine.

Les tests d'absorption réalisés sont comme décrits dans l'exemple 2.

A titre d'exemple, on compare dans le tableau 2 les taux de charge ($\alpha$ = nb de mole gaz acide/nb de mole amine) obtenus à 40°C pour différentes pressions partielles de $CO_2$ entre des solutions absorbantes de Bis(diméthylamino-3-propyl)éther et (diméthylamino-2-éthyl)-(diméthylamino-3-propyl)-éther selon l'invention à 30 % en poids et contenant 5 % en poids de pipérazine pour accélérer la cinétique de captage du $CO_2$ en post-combustion, une solution absorbante de MonoEthanolAmine à 30 % en poids, ainsi qu'une solution absorbante de 1,2-bis(2-diméthylaminoéthoxy)éthane contenant 5 % en poids de pipérazine.

Les taux de charge $\alpha_{PPCO2=0,1bar}$ et $\alpha_{PPCO2=1bar}$ sont comme définis dans l'exemple 2.

On calcule la capacité cyclique $\Delta\alpha_{PC}$ exprimée en moles de $CO_2$ par kg de solvant, de la même manière que dans l'exemple 2 :

$$\Delta\alpha_{PC} = (\alpha_{PPCO2=0,1bar} - \alpha_{PPCO2=0,01bar}) \cdot [A] \cdot 10 / M$$

où [A] est la concentration totale d'amine exprimée en % poids, et dans le cas des mélanges d'amine, M est la masse molaire moyenne du mélange d'amines en g/mol :

$$M = [A]/([DA]/M_{DA}+[PZ]/M_{PZ}),$$

où [DA], [PZ] sont respectivement les concentrations en diamine tertiaire et en pipérazine, exprimées en % poids, $M_{DA}$ et $M_{PZ}$ sont respectivement les masses molaires de la diamine tertiaire et de la pipérazine en mol/kg.

Tableau 2.

| Solvant | T (°C) | Taux de charge $\alpha = n_{CO2}/n_{amine}$ $P_{PCO2}$ = 0,1 bar | $P_{PCO2}$ = 0,01 bar | $\Delta\alpha_{PC}$ ($mol_{CO2}$/ kg Solvant) |
|---|---|---|---|---|
| MEA 30 % poids | 40 | 0.52 | 0.44 | 0.38 |
| 1,2-bis(2-diméthylaminoéthoxy)éthane (décrit dans le document US 4,405,582) 30 % pds + pipérazine 5 % pds | 40 | 0.82 | 0.37 | 0.93 |
| Bis(diméthylamino-3-propyl)éther 30 % pds (selon l'invention) + pipérazine 5 % pds | 40 | 1.04 | 0.47 | 1.25 |
| (diméthylamino-2-éthyl)-(diméthylamino-3-propyl)-éther 30 % pds (selon l'invention) + pipérazine 5 % pds | 40 | 1.05 | 0.44 | 1.29 |

Cet exemple montre les taux de charge plus importants qui peuvent être obtenus grâce à une solution absorbante selon l'invention, comprenant 30 % poids de Bis(diméthylamino-3-propyl)éther ou de (diméthylamino-2-éthyl)-(diméthylamino-3-propyl)-éther 30 % pds et 5 % en poids de pipérazine.

De plus, pour une application captage des fumées en post-combustion où la pression partielle de $CO_2$ dans l'effluent à traiter est de 0.1 bar, cet exemple illustre la plus grande capacité cyclique obtenue grâce à une solution absorbante selon l'invention, comprenant 30 % poids de diamine tertiaire selon l'invention et 5 % poids de pipérazine pour atteindre un taux d'abattage de 90 % en sortie d'absorbeur par rapport à la MEA 30 % poids.

On observe également un gain en termes de capacité cyclique de la formulation selon l'invention comparée à la 1,2-bis(2-diméthylaminoéthoxy)éthane citée dans le brevet US4,405,582.

Exemple 4 : Stabilité d'une solution d'amine selon l'invention

Les diamines mises en oeuvre selon l'invention présentent la particularité d'être particulièrement résistants aux dégradations qui peuvent se produire dans une unité de désacidification.

On réalise un test de dégradation sur des solutions aqueuses d'amine au sein d'un réacteur fermé et dont la température est contrôlée par un système de régulation. Pour chaque solution, le test est réalisé dans un volume liquide de 50 $cm^3$ injecté dans le réacteur. La solution de solvant est préalablement tirée sous vide avant toute injection de gaz et le réacteur est ensuite placé dans une coque chauffante à la température de consigne et mis sous agitation magnétique. On injecte alors le gaz concerné à la pression partielle souhaitée. Cette pression est ajoutée à la pression initiale due à la tension de vapeur de la solution aqueuse d'amine. Différentes conditions de dégradation sont testées:

- dégradation thermique : se fait en l'absence de gaz acide seule la température de l'essai est maintenue constante et on mesure la tension de vapeur du solvant.
- dégradation sous $CO_2$ : on injecte du $CO_2$ de manière à atteindre une pression partielle de 20 bar
- dégradation sous $O_2$ : on injecte de l'air sous une pression partielle de 20 bars ce qui donne une pression partielle d'oxygène de 4,2 bars.

Le tableau 3 ci-dessous donne le taux de dégradation TD, par dégradation sous $CO_2$, de la Bis(diméthylamino-3-propyl)éther selon l'invention, et de la bis(2-diméthylaminoéthyl)éther décrite dans le document JP8257353 ainsi que la MEA comme amines de références, pour une durée de 15 jours, défini par l'équation ci-dessous :

$$TD(\%) = \frac{[A]-[A]^\circ}{[A]^\circ}$$

où [A] est la concentration du composé dans l'échantillon dégradé, et [A]° est la concentration du composé dans la solution non dégradée. Les concentrations [A] et [A]° sont déterminées par chromatographie en phase gaz.

Tableau 3

| | | | $PP_{CO2}$ = 20 bar |
|---|---|---|---|
| Amine | Concentratio n | T (°C) | TD(%) |
| MEA | 30 % poids | 140 | 42 % |
| bis(2-diméthylaminoéthyl)ether (décrit dans JP8257353) | 50 % poids | 140 | 32% |
| Bis(diméthylamino-3-propyl)éther (selon invention) | 50 % poids | 140 | 12% |

Le tableau 4 ci-dessous donne le taux de dégradation TD, par dégradation sous $O_2$, de la Bis(diméthylamino-3-propyl)éther selon l'invention, ainsi que la MEA comme amine de référence, pour une durée de 15 jours, défini comme précédemment :

Tableau 4

| | | | $PP_{O2}$ = 4,2 bar |
|---|---|---|---|
| Amine | Concentration | T (°C) | TD(%) |
| MEA | 30 % poids | 140 | 21 % |
| Bis(diméthylamino-3-propyl)éther (selon l'invention) | 50 % poids | 140 | 14% |

Le tableau 5 ci-dessous donne le taux de dégradation TD sous dégradation thermique, pour une température de 180°C, en absence de gaz acide, qui est représentative des dégradations qui pourraient se produire en fond de régénérateur, si l'on souhaite obtenir un gaz acide à forte pression pour des applications de réinjection.

Tableau 5

| | | | Taux de dégradation |
|---|---|---|---|
| Amine | Concentration | T (°C) | Tension de vapeur de la solution absorbante |
| bis(2-diméthylaminoéthyl)ether (décrit par JP8257353) | 50 % poids | 180 | 35% |
| Bis(diméthylamino-3-propyl)éther (selon l'invention) | 50 % poids | 180 | 5% |

Cet exemple montre que l'utilisation des composés selon l'invention, comme amine dans une solution absorbante permet d'obtenir un faible taux de dégradation par rapport aux solutions absorbantes à base d'amines de l'art antérieur (MonoEthanolAmine et bis(2-diméthylaminoéthyl)ether décrit dans le document JP8257353). Par conséquent, il est possible de régénérer la solution absorbante à plus forte température et donc d'obtenir un gaz acide à plus forte pression. Ceci est particulièrement intéressant dans le cas du captage du $CO_2$ en post-combustion où le gaz acide doit être comprimé pour être liquéfié avant réinjection.

Exemple 5 : Capacité et sélectivité d'élimination de $H_2S$ d'un effluent gazeux contenant $H_2S$ et $CO_2$ par des solution de Bis(diméthylamino-3-propyl)étherd'amine et de (diméthylamino-2-éthyl)-(diméthylamino-3-propyl)-éther :

On réalise un test d'absorption à 40°C sur des solutions aqueuses d'amine au sein d'un réacteur parfaitement agité ouvert coté gaz.

Pour chaque solution, l'absorption est réalisée dans un volume liquide de 50 cm3 par bullage d'un courant gazeux constitué d'un mélange azote : dioxyde de carbone : hydrogène sulfuré de 89:10:1 en proportions volumiques, d'un débit de 30NL/h pendant 90 minutes.

On mesure à l'issue du test le taux de charge en $H_2S$ obtenu ($\alpha$ =nombre de mole de $H_2S$ /kg de solution absorbante) ainsi que la sélectivité d'absorption vis-à-vis du $CO_2$.

Cette sélectivité S est définie de la manière suivante :

$$S = (\alpha_{H2S}/\alpha_{CO2}) . \frac{(\text{Concentration du mélange gazeux en } CO_2)}{(\text{Concentration du mélange gazeux en } H_2S)}$$

soit dans les conditions du test décrit ici S =10($\alpha_{H2S}/\alpha_{CO2}$).

A titre d'exemple, on peut comparer les taux de charge et la sélectivité entre des solutions absorbantes de Bis(diméthyamino-3-propyl)éther à 50 % en poids et de (diméthylamino-2-éthyl)-(diméthylamino-3-propyl)-éther à 50 % selon l'invention et une solution absorbante de Méthyldiéthanolamine à 47 % en poids ainsi qu'une solution absorbante de 1,2-bis(N,N-diéthylaminoethoxy)éthane, molécule selon la formule générale du brevet US 4,405,582, à 50 % pds.

Tableau 6.

| Composé | Concentration | T (°C) | Taux de charge en H2S (mole/kg) | Sélectivité |
|---|---|---|---|---|
| MDEA | 47 % | 40 | 0,16 | 6,3 |
| 1,2-bis(N,N-diéthylaminoethoxy)éthane (décrit dans le document US 4,405,582) | 50 % | 40 | 0,17 | 6,2 |
| Bis(diméthylamino-3-propyl)éther (selon l'invention) | 50 % | 40 | 0,22 | 7,2 |
| (diméthylamino-2-éthyl)-(diméthylamino-3-propyl)-éther (selon l'invention) | 50 % | 40 | 0,21 | 7,5 |

Cet exemple illustre les gains en taux de charge et en sélectivité pouvant être atteint avec une solution absorbante selon l'invention, comprenant 50 % pds de Bis(diméthyamino-3-propyl)éther ou de (diméthylamino-2-éthyl)-(diméthylamino-3-propyl)-éther.

## Revendications

1. Procédé d'élimination des composés acides contenus dans un effluent gazeux, dans lequel on effectue une étape d'absorption des composés acides par mise en contact de l'effluent avec une solution absorbante comportant :

   - de l'eau ;
   - au moins une diamine choisie parmi les molécules répondant aux formules générales (I) et (II)

   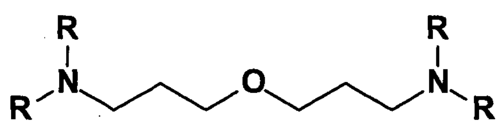

   (I)

   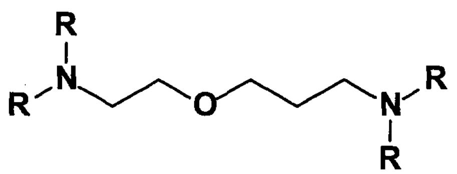

   (II)

   dans lesquelles, chaque radical R est indépendamment choisi parmi un radical méthyle ou un radical éthyle.

2. Procédé selon la revendication 1, dans lequel la diamine est choisie parmi l'une des molécules suivantes :

   le Bis(diméthylamino-3-propyl)éther

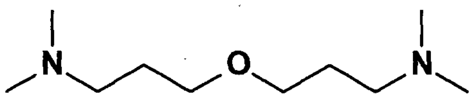
,

le Bis(diéthylamino-3-propyl)éther

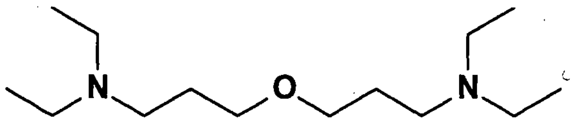
,

le (diméthylamino-2-éthyl)-(diméthylamino-3-propyl)-éther

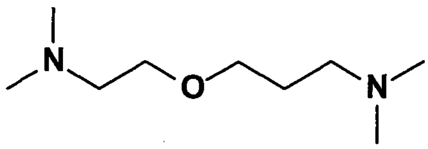
,

le (diéthylamino-2-éthyl)-(diméthylamino-3-propyl)-éther

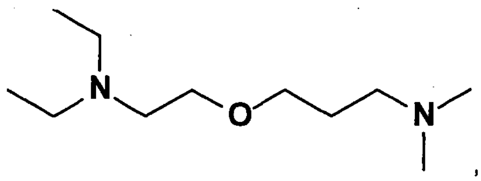
,

le (diméthylamino-2-éthyl)-(diéthylamino-3-propyl)-éther

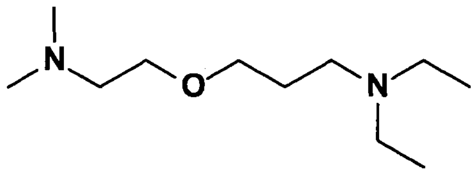
,

le (diéthylamino-2-éthyl)-(diéthylamino-3-propyl)-éther

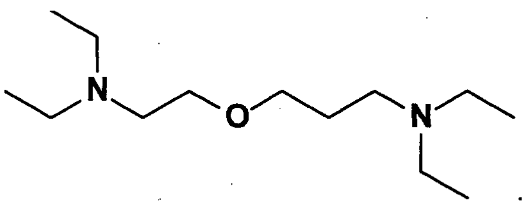
.

**3.** Procédé selon l'une des revendications 1 et 2, dans lequel la solution absorbante comporte entre 10 % et 90 % poids de ladite diamine et entre 10 % et 90 % poids d'eau.

**4.** Procédé selon l'une des revendications précédentes, dans lequel la solution absorbante comporte, en outre, une quantité non nulle et inférieure à 20 % poids d'une amine primaire ou secondaire.

**5.** Procédé selon la revendication 4 dans lequel ladite amine primaire ou secondaire est choisie dans le groupe constitué par :

- MonoEthanolAmine,
- N-butylethanolamine
- Aminoethylethanolamine,
- Diglycolamine,
- Pipérazine,
- N-(2-hydroxyethyl)Pipérazine,
- N-(2-aminoethyl)Pipérazine,
- Morpholine,
- 3-(metylamino)propylamine,
- 1,6-hexanediamine,
- N,N'-diméthyl-1,6-hexanediamine.

**6.** Procédé selon l'une des revendications précédentes, dans lequel la solution absorbante comporte, en outre, un solvant physique choisi parmi le méthanol et le sulfolane.

**7.** Procédé selon l'une des revendications précédentes, dans lequel l'étape d'absorption des composés acides est réalisée à une pression comprise entre 1 bar et 120 bars, et à une température comprise entre 20°C et 100°C.

**8.** Procédé selon l'une des revendications précédentes, dans lequel après l'étape d'absorption, on obtient un effluent gazeux appauvri en composés acides et une solution absorbante chargée en composés acides, et on effectue au moins une étape de régénération de la solution absorbante chargée en composés acides.

**9.** Procédé selon l'une des revendications précédentes, dans lequel l'étape de régénération est réalisée à une pression comprise entre 1 bar et 10 bars et une température comprise entre 100°C et 180°C.

**10.** Procédé selon l'une des revendications précédentes, dans lequel l'effluent gazeux est choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.

**11.** Procédé selon l'une des revendications 1 à 10, dans lequel l'effluent gazeux comporte de l'$H_2S$ et du $CO_2$, le procédé étant mis en oeuvre pour l'élimination sélective de l'$H_2S$ par rapport au $CO_2$.

## Patentansprüche

**1.** Verfahren zum Entfernen von sauren Verbindungen, die in einem gasförmigen Abfluss enthalten sind, wobei ein Schritt zur Absorption der sauren Verbindungen durch Inkontaktbringen des Abflusses mit einer Absorptionslösung durchgeführt wird, umfassend:

- Wasser;
- mindestens ein Diamin, ausgewählt aus den Molekülen mit den allgemeinen Formeln (I) und (II)

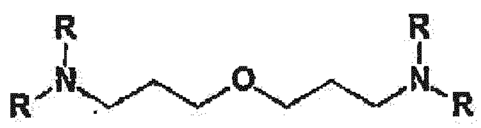

(I)

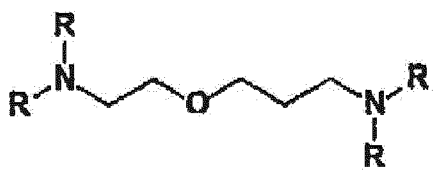

(II)

worin jeder Rest R unabhängig ausgewählt ist aus einem Methylrest oder einem Ethylrest.

**2.** Verfahren nach Anspruch 1, wobei das Diamin aus einem der folgenden Moleküle ausgewählt ist:

Bis(dimethylamino-3-propyl)-ether

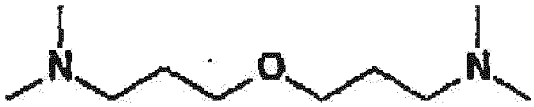
,

Bis(diethylamino-3-propyl)-ether

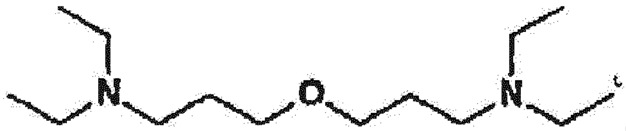
,

(Dimethylamino-2-ethyl)-(dimethylamino-3-propyl)-ether

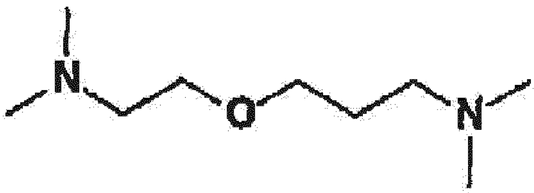
,

(Diethylamino-2-ethyl)-(dimethylamino-3-propyl)-ether

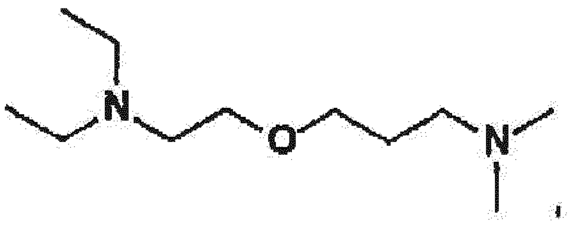
,

(Dimethylamino-2-ethyl)-(diethylamino-3-propyl)-ether

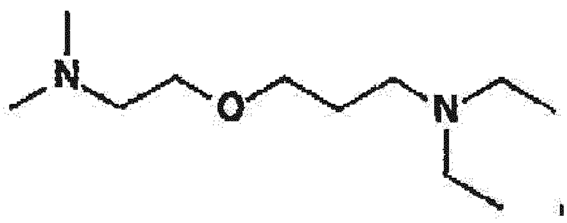
,

(Diethylamino-2-ethyl)-(diethylamino-3-propyl)-ether

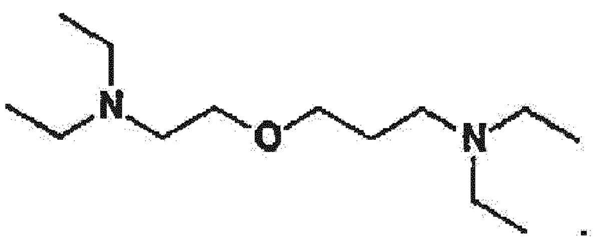
.

3. Verfahren nach einem der Ansprüche 1 und 2, wobei die Absorptionslösung zwischen 10 Gew.-% und 90 Gew.-% des Diamins und zwischen 10 Gew.-% und 90 Gew.-% Wasser umfasst.

4. Verfahren nach einem der vorhergehenden Ansprüche, wobei die Absorptionslösung ferner eine Menge ungleich null und kleiner 20 Gew.-% eines primären oder sekundären Amins umfasst.

5. Verfahren nach Anspruch 4, wobei das primäre oder sekundäre Amin ausgewählt ist aus der Gruppe bestehend aus:

- Monoethanolamin,
- N-Butylethanolamin
- Aminoethylethanolamin,
- Diglycolamin,
- Piperazin,
- N-(2-Hydroxyethyl)piperazin,
- N-(2-Aminoethyl)piperazin,
- Morpholin,
- 3-(Metylamino)propylamin,
- 1,6-Hexandiamin,
- N,N'-Dimethyl-1,6-hexandiamin.

6. Verfahren nach einem der vorhergehenden Ansprüche, wobei die Absorptionslösung ferner ein physikalisches Lösungsmittel umfasst, ausgewählt aus Methanol und Sulfolan.

7. Verfahren nach einem der vorhergehenden Ansprüche, wobei der Schritt zur Absorption der sauren Verbindungen bei einem Druck im Bereich zwischen 1 bar und 120 bar, und bei einer Temperatur im Bereich zwischen 20 C und 100 °C durchgeführt wird.

8. Verfahren nach einem der vorhergehenden Ansprüche, wobei nach dem Absorptionsschritt ein an sauren Verbindungen armer gasförmigen Abfluss und eine mit sauren Verbindungen beladene absorbierende Lösung erhalten werden, und mindestens ein Schritt zur Regeneration der mit sauren Verbindungen beladenen absorbierenden Lösung durchgeführt wird.

9. Verfahren nach einem der vorhergehenden Ansprüche, wobei der Schritt zur Regeneration bei einem Druck im Bereich zwischen 1 bar und 10 bar, und einer Temperatur im Bereich zwischen 100 C und 180 °C durchgeführt wird.

10. Verfahren nach einem der vorhergehenden Ansprüche, wobei der gasförmige Abfluss ausgewählt ist aus Erdgas, Synthesegasen, Verbrennungsgasen, Raffineriegasen, sauren Gasen aus einer Amineinheit, Gasen aus einer Reduktionseinheit am Ende des Claus-Verfahrens, Biomasse-Gärungsgasen, Gasen aus Zementanlagen, Rauchgasen aus Verbrennungsanlagen.

11. Verfahren nach einem der Ansprüche 1 bis 10, wobei der gasförmige Abfluss $H_2S$ und $CO_2$ umfasst, wobei das Verfahren zur selektiven Entfernung von $H_2S$ in Bezug auf $CO_2$ durchgeführt wird.

## Claims

1. A method of removing acid compounds contained in a gaseous effluent, wherein an acid compound absorption stage is carried out by contacting the effluent with an absorbent solution comprising:

- water,
- at least one diamine selected from among the molecules with general formulas (I) and (II):

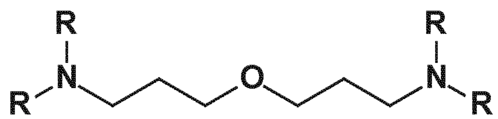

(I)

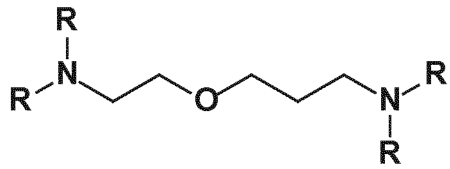

(II)

wherein each radical R is independently selected from among a methyl radical or an ethyl radical.

**2.** A method as claimed in claim 1, wherein the diamine is selected from among one of the following molecules:

bis(dimethylamino-3-propyl)ether

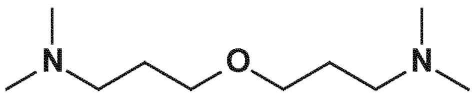

,

bis(diethylamino-3-propyl)ether

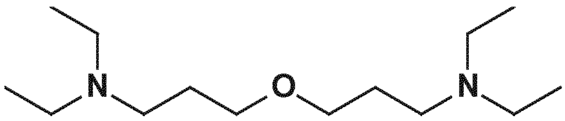

,

(dimethylamino-2-ethyl)-(dimethylamino-3-propyl)-ether

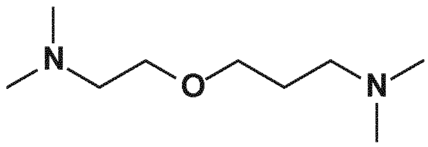

,

(diethylamino-2-ethyl)-(dimethylamino-3-propyl)-ether

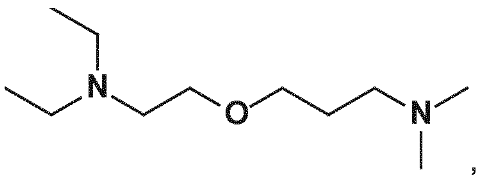

,

(dimethylamino-2-ethyl)-(diethylamino-3-propyl)-ether

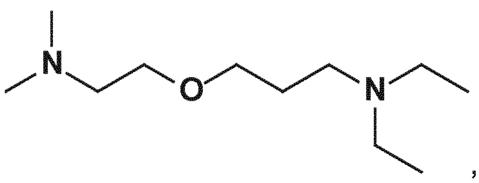

,

(diethylamino-2-ethyl)-(diethylamino-3-propyl)-ether

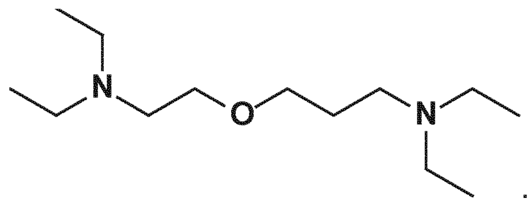

.

3. A method as claimed in any one of claims 1 and 2, wherein the absorbent solution comprises between 10 wt.% and 90 wt.% of said diamine and between 10 wt.% and 90 wt.% water.

4. A method as claimed in any one of the previous claims, wherein the absorbent solution also comprises a non-zero proportion below 20 wt.% of a primary or secondary amine.

5. A method as claimed in claim 4, wherein said primary or secondary amine is selected from the group consisting of:

- MonoEthanolAmine,
- N-butylethanolamine,
- Aminoethylethanolamine,
- Diglycolamine,
- Piperazine,
- N-(2-hydroxyethyl)piperazine,
- N-(2-aminoethyl)piperazine,
- Morpholine,
- 3-(metylamino)propylamine,
- 1,6-hexanediamine,
- N,N'-dimethyl-1,6-hexanediamine.

6. A method as claimed in any one of the previous claims, wherein the absorbent solution furthermore comprises a physical solvent selected from among methanol and sulfolane.

7. A method as claimed in any one of the previous claims, wherein the acid compound absorption stage is carried out at a pressure ranging between 1 bar and 120 bars, and at a temperature ranging between 20°C and 100°C.

8. A method as claimed in any one of the previous claims wherein, after the absorption stage, a gaseous effluent depleted in acid compounds and an absorbent solution laden with acid compounds are obtained, and at least one stage of regenerating the absorbent solution laden with acid compounds is performed.

9. A method as claimed in any one of the previous claims, wherein the regeneration stage is carried out at a pressure ranging between 1 bar and 10 bars, and at a temperature ranging between 100°C and 180°C.

10. A method as claimed in any one of the previous claims, wherein the gaseous effluent is selected from among natural gas, syngas, combustion fumes, refinery gas, acid gas from amine units, Claus tail gas, biomass fermentation gas, cement plant gas and incinerator fumes.

11. A method as claimed in any one of claims 1 to 10, wherein the gaseous effluent comprises $H_2S$ and $CO_2$, the method being implemented for selective $H_2S$ removal over $CO_2$.

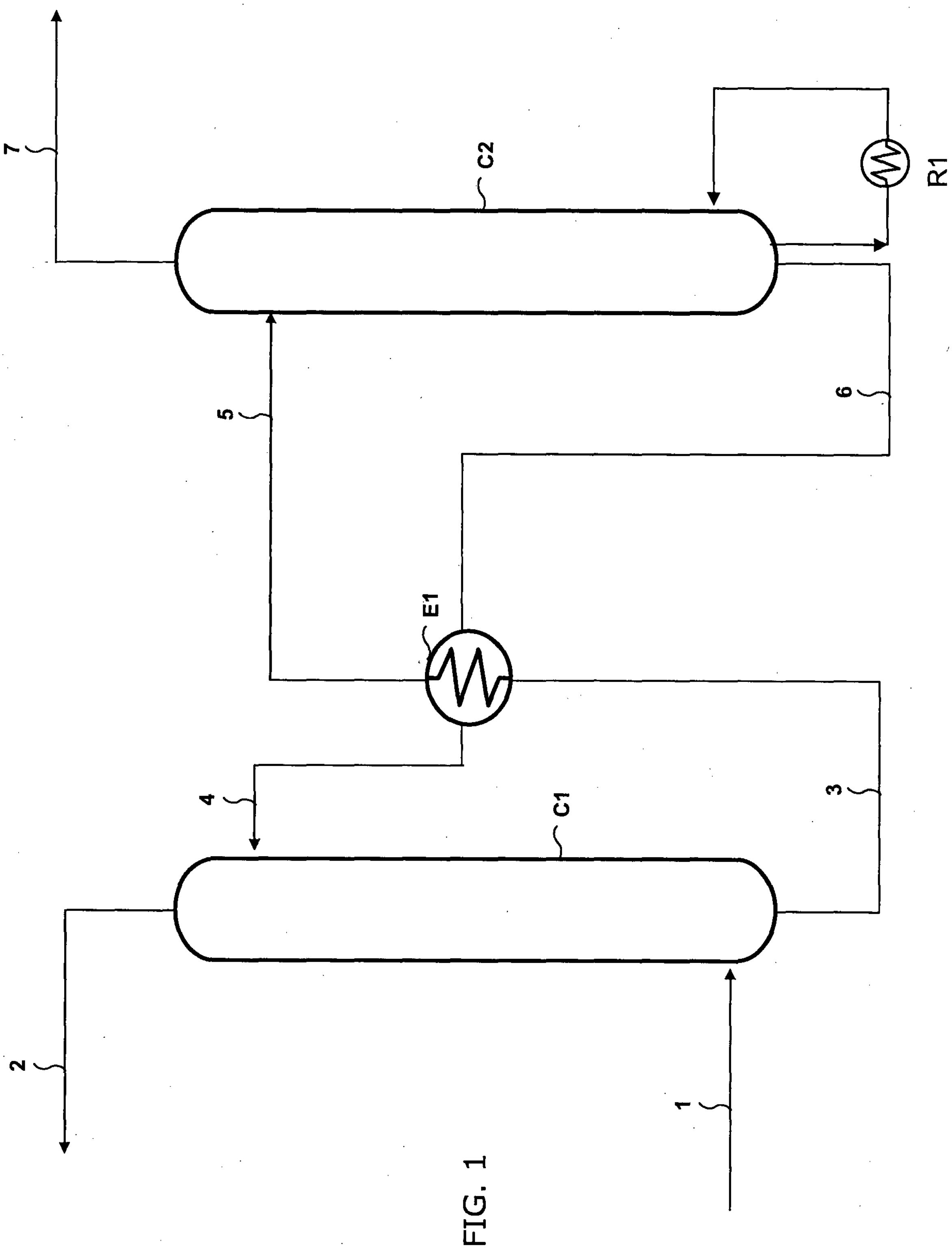


FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6852144 B
- US 4405582 A
- JP 8257353 B
- US 3480675 A
- WO 2009059148 A
- US 4965362 A
- US 5268499 A


### Littérature non-brevet citée dans la description


- **G. SARTORI.** *Industrial Engineering and Chemistry Fundamentals,* 1983, vol. 22, 239-249
- *Separation and Purification Methods,* 1987, vol. 16 (2), 171-200
- **J. FAKSTORP.** *Acta Chemica Scandinavia,* 1953, 134-139
- *350-353,* 1954
- *ACTA CHEMICA SCANDINAVIA,* 1954, 350-353